# EUROPEAN PATENT SPECIFICATION

(11) **EP 2 785 567 B1**
(45) Date of publication and mention of the grant of the patent: **25.12.2019**
(21) Application number: 11815706.4
(22) Date of filing: 28.11.2011
(51) Int. Cl.: B60T 1/10, B60T 13/58, B60T 13/66, B60T 17/02, B60T 17/06, F16D 61/00

(54) **METHOD FOR CONTROLLING A COMPRESSED AIR GENERATION SYSTEM OF AN AUTOMOTIVE VEHICLE, COMPRESSED AIR GENERATION SYSTEM AND AUTOMOTIVE VEHICLE COMPRISING SUCH A SYSTEM**
VERFAHREN ZUR STEUERUNG EINES DRUCKLUFTERZEUGUNGSSYSTEMS EINES KRAFTFAHRZEUGES, DRUCKLUFTERZEUGUNGSSYSTEM UND KRAFTFAHRZEUG MIT EINEM SOLCHEN SYSTEM
PROCÉDÉ PERMETTANT DE COMMANDER UN SYSTÈME DE GÉNÉRATION D'AIR COMPRIMÉ D'UN VÉHICULE AUTOMOBILE, SYSTÈME DE GÉNÉRATION D'AIR COMPRIMÉ ET VÉHICULE AUTOMOBILE COMPRENANT CE SYSTÈME

(43) Date of publication of application: 08.10.2014
(73) Proprietor: VOLVO LASTVAGNAR AB, 405 08 Göteborg (SE)
(72) Inventor: PETIT, Jean-Pascal, F-69250 Montany (FR)
(74) Representative: Plasseraud IP
(86) International application number: PCT/IB2011/003250
(87) International publication number: WO 2013/079987

(56) References cited:
- WO-A1-2010/007411
- WO-A1-2011/144271
- DE-A1-102006 048 071
- GB-A- 2 444 269
- US-A- 4 798 053
- US-A1- 2011 253 098

## Description

### TECHNICAL FIELD OF THE INVENTION

The invention concerns a method for controlling a compressed air generation system of an automotive vehicle. The invention also concerns a compressed air generation system adapted to such a method, and an automotive vehicle comprising such a compressed air generation system.

### BACKGROUND OF THE INVENTION

Some automotive vehicles, such as trucks, are equipped with a compressed air system adapted to feed pneumatically powered subsystems such as a brake system. This involves an air compressor generally adapted to compress air to a pressure comprised between 8 and 12 bars. The compressor is usually driven mechanically by the driveline of the vehicle, but it may alternatively be driven by an electric motor. When the compressor is driven by the vehicle driveline, it is known to operate the compressor as much as possible during braking or coasting phases of the vehicle, because the energy for driving the compressor is then recovered from the vehicle deceleration rather than derived from the combustion of fuel in the vehicle engine. This allows sparing a given quantity of fuel which would have otherwise been necessary to drive the compressor. Nevertheless such strategies do not allow producing all the air needed for certain applications, such as for city buses or delivery trucks. Indeed, the compressor cannot produce enough air during the limited periods of time where energy can be recovered from the vehicle deceleration.

WO-2011/144271 discloses a pressure control device for a vehicle where an air compressor can be operated in a compressed air expansion mode to assist the drive of the vehicle. DE-10.2006.048071 discloses an air supply system with multiple air circuits, supplied by tanks, with at least one high pressure circuit.

### SUMMARY OF THE INVENTION

The invention aims at proposing a new method for controlling a compressed air generation system of an automotive vehicle, which optimizes the operation of the compressed air system in order to further reduce the net energy consumption related to compressed air generation.

To this end, the invention concerns a method for controlling a compressed air generation system of an automotive vehicle, the system comprising at least one compressor and a first compressed air tank, wherein the method includes steps of :
a) in a braking and/or coasting mode of the vehicle, compressing air to a pressure higher than a nominal pressure of the first compressed air tank,
b) storing air compressed at step a) in a high pressure compressed air tank of the compressed air generation system,
c) in a power mode of the vehicle, expanding at least a portion of the air of the high pressure compressed air tank in a pneumatic motor for generating torque.

Thanks to the invention, the proportion of compressed air which can be produced using the energy recovered from the vehicle deceleration can be increased, and at least part of the high pressure compressed air thus created can be used to create extra torque to be delivered to various mechanically powered subsystems of the vehicle without this torque being created at the expense of the quantity of the comparatively low pressure compressed air available for the vehicle subsystems.

According to further aspects of the invention which are advantageous but not compulsory, such a method may incorporate one or several of the following features:
- at step c), at least a portion of the air of the high pressure compressed air tank is expanded in the pneumatic motor down to a pressure not inferior to the pressure of the first compressed air tank and is stored in said first compressed air tank;
- at step c), a portion of the air of the high pressure compressed air tank is expanded in the pneumatic motor to the atmosphere pressure;
- at least a portion of the torque generated at step c) is delivered to the driveline of the vehicle, for example to the engine and/or to the wheels of the vehicle;
- at least a portion of the torque generated at step c) is delivered to an alternator, to a compressor of an air conditioning system of the vehicle and/or to a compressor of a refrigerating system of a refrigerated compartment of the vehicle;
- at least a portion of the air of the high pressure compressed air tank is directed to an intake manifold of the internal combustion engine;
- the compressor is driven by a driveline of the vehicle.
- the compressor is driven by an electric motor.
- in a power mode of the vehicle, a compressor is able to deliver pressurized air directly to the first compressed air tank.

The invention also concerns a compressed air generation system of an automotive vehicle, comprising at least one air compressor and a first compressed air tank, wherein the air compressor is adapted to compress air to a pressure higher than a nominal pressure of the first compressed air tank, wherein it further comprises:
- at least one high pressure compressed air tank,
- a pneumatic motor for generating torque by expanding the compressed air stored in the high pressure compressed air tank;
- and means for connecting an outlet of the pneumatic motor to the first compressed air tank.

According to further aspects of the invention which are advantageous but not compulsory, such a compressed air generation system may incorporate one or several of the following features:
- the compressor is reversible and forms the pneumatic motor for generating torque;
- the system comprises means to selectively connect an inlet of the compressor to an atmospheric pressure air intake or to the first compressed air tank;
- the means for generating torque comprise a pneumatic motor independent from the compressor;
- the first compressed air tank is a low pressure compressed air tank adapted to feed auxiliary pneumatically powered subsystems of the vehicle;
- the system comprises a low pressure compressor for feeding the first air compressed air tank and a high pressure compressor for feeding the high pressure compressed air tank;
- the low pressure and the high pressure air compressors may be connected in series to deliver compressed air to the high pressure compressed air tank.

The invention also concerns an automotive vehicle comprising a compressed air generation system as mentioned here above.

### BRIEF DESCRIPTION OF THE DRAWINGS

The invention will now be explained in correspondence with the annexed figures as illustrative examples, without restricting the object of the invention. In the annexed figures:
- figure 1 is a schematic view of a portion of an automotive vehicle and a compressed air generation system according to the invention, in a first configuration;
- figure 2 is a schematic view similar to figure 1, for a second configuration of the system of figure 1; and
- figure 3 is a schematic view similar to figure 1 showing a second embodiment of the invention.

### DETAILED DESCRIPTION OF SOME EMBODIMENTS

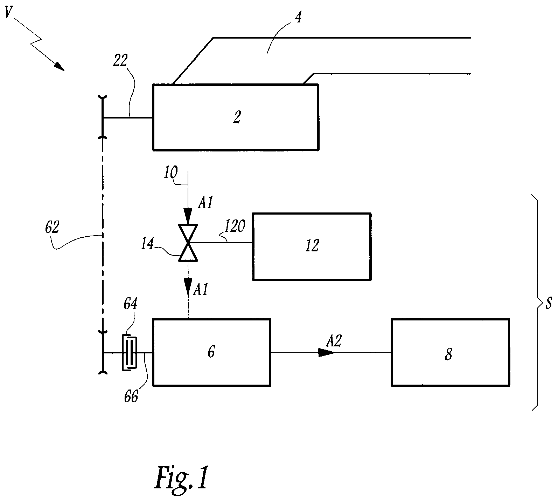

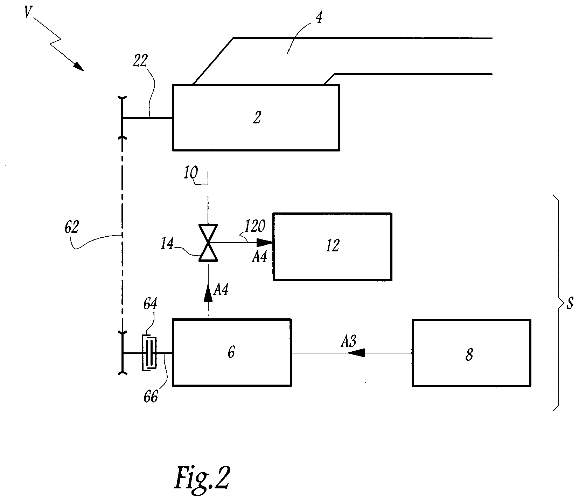

As represented on figures 1 and 2, an automotive vehicle V has a driveline comprising a main drive engine such as an internal combustion engine 2 adapted to be fed with air via an air intake manifold 4. Alternatively, the vehicle could be equipped with another type of main drive engine, such as an electric motor or a combination of an electric motor and of an internal combustion engine. In most cases, the main drive engine operates by using up energy stored in the vehicle, such as under the form of a fuel or under the form of electric energy stored in a battery. Vehicle V comprises a compressed air generation system S, including an air compressor 6 which is, in this example, driven by engine 2, for example via a belt 62 or a chain driven by an output shaft 22 of engine 2. Compressor 6 can be connected and disconnected from belt 62 thanks to an optional clutch 64, in order to run the compressor 6 only when there is a need for compressed air, so that the energy consumed by the compressor is minimized. Other suitable means to activate and deactivate compressor 6, or to limit the amount of energy it absorbs when no air compression is required, are described for example in documents DE-A-39 09 531 and DE-A-40 26 684. For example, compressor 6 can be a piston compressor, having intake and exhaust valves. Compressor 6 is fed with air at atmospheric pressure via an air intake pipe 10. Compressor 6 could alternatively be driven by other components of the driveline of the vehicle rather than directly by the engine. It could therefore be driven by the gearbox or by the transmission to the wheels. According to a further alternative, the compressor 6 could be driven by an electric motor, especially in the case of an electric or hybrid electric vehicle.

Compressor 6 is adapted to feed a high pressure compressed air tank 8 of system S in which compressed air is stored at a nominal pressure which can be comprised, for example, between 20 and 40 bars. The compressor must thus be able to deliver air at such high pressure. It can be a multistage compressor.

System S further comprises a low pressure compressed air tank 12 in which compressed air is stored at a nominal pressure which is comparatively lower than the high pressure, for example comprised between 7 and 15 bars, and typically approximately 12 bars. The nominal pressure is the pressure which is regulated in the low pressure reservoir during normal operation of the vehicle. This low pressure corresponds to a service air pressure used to operate one or several non-represented pneumatically-powered subsystems of vehicle V, such as a braking system, a pneumatic suspension system, or any other pneumatic subsystem equipping vehicle V. For example, in the case of a city bus, pneumatic door-opening actuators can be fed with air coming from tank 12. In other words, the low pressure air tank 12 is pneumatically connected to one or several pneumatically-powered subsystems of vehicle V.

Low pressure air tank 12 is fed via an inlet pipe 120 which is connected to air intake pipe 10 for example via a three way valve 14 also connected to an air inlet of air compressor 6. Through valve 14, the air inlet of compressor 6 can be connected to low pressure air tank 12 or to the air intake 10.

In the shown embodiment, compressor 6 is a reversible compressor. In other words, compressor 6 can be used, in a first configuration, to compress air when it receives an external torque or, in a second configuration, to expand air in order to generate an output torque. In its second configuration, compressor 6 works as a pneumatic motor. Nevertheless, the invention could also be implemented with a pneumatic motor which would be distinct from the compressor.

The first or compression configuration of compressor 6 is represented on figure 1. In this configuration, compressor 6 uses a torque delivered by the driveline and compresses air entering from intake pipe 10 at atmospheric pressure as shown by arrow A1. In this configuration compressor 6 fills high pressure air tank 8, as shown by arrow A2. In this configuration, three way valve 14 is controlled so that no air can enter in low pressure tank 12 nor exit from it.

In the second or expansion configuration represented on figure 2, the pneumatic motor, here embodied as the compressor 6 used in reverse, is fed with a high pressure air stored in high pressure air tank 8, as shown by arrow A3. During this operation, air is expanded to a reduced pressure within compressor 6 and flows out of compressor 6 via air intake 10, as shown by arrow A4. In this case, the air inlet of compressor 6 can be considered as an air outlet of compressor 6 operating as a pneumatic motor. In this configuration, three way valve 14 is preferably controlled so as to connect the pneumatic motor air outlet to inlet pipe 120 of low pressure air tank 12, so that air expanded in compressor 6 in its second operating configuration fills low pressure air tank 12, rather than being released to the ambient air, at least as long as low pressure air tank is not full. In this operating configuration, if the compressor is a conventional reversible piston compressor, the roles of the intake and exhaust valves of compressor 6 are inverted: exhaust valves are opened to let compressed air in from high pressure tank 8, initiating pistons motion in compressor 6. Air expansion begins when exhaust valves are closed, then ends when the pistons reach their extreme position. Air is then expelled from the cylinders by opening the intake valves of compressor 6.

During the expansion operating period of compressor 6, the air expansion induces generation of an output torque delivered to a shaft 66 of compressor 6. In that case, shaft 66 is considered as the output shaft of compressor 6. But it should be noted that, at least as long as low pressure air tank is not full, this expansion is only partial in that air pressure is only reduced down to the pressure of air in the low pressure air tank, and not below. This means that the energy accumulated by the air under high pressure, energy which has been recovered from the kinetic energy of the vehicle, is partly transformed into mechanical energy in the pneumatic motor, but part of it remains under the form of pneumatic energy which can be used by pressurized air consumers on board the vehicle.

Low pressure air tank 12 and high pressure air tank 8 can be made of a metallic material and can be thermally isolated so as to limit pressure losses due to thermal exchanges with the outside of air tanks 8 and 12. Alternatively, one or both air tanks can be made of composite fiber reinforced resin.

The invention works in the following way: when vehicle V is in a braking and/or coasting mode, i.e. for example when the braking system of vehicle V is actuated or when no fuel or only a minimal amount of fuel is injected in the engine, the driveline of the vehicle is not driven by engine 2. Nevertheless, the vehicle is still rolling so that at least part of the driveline is driven due to the motion of the vehicle. Thus, if the compressor is mechanically connected to the vehicle driveline, torque can be delivered to compressor 6 in order to compress air without fuel over-consumption. In the case of an electrically driven compressor, the electricity used to drive the compressor can be produced by a generator which itself can be driven by the driveline with no fuel consumption penalty. In this first working configuration of compressor 6, air is compressed by compressor 6 to a high pressure in order to maximize the quantity of pressurized air produced at no energy cost, since the energy used can be recovered from the kinematic energy of the vehicle. This is very useful since during such phases, quite high amounts of energy can be recovered in principle, while even electric vehicles or electric hybrid vehicles are often unable to recover all that energy due to the fact that the batteries used to store the recovered energy have power limitations which limit the amount of energy which can be effectively recovered during those relatively short periods of time. Compressed air is stored in high pressure air tank 8.

The air stored in high pressure air tank 8 can be used at a later time, for example when vehicle V is in power mode, i.e. when the main drive engine 2 is delivering torque to the driveline of vehicle V. First, it can be used to produce extra torque using the second operating configuration of compressor 6, while filling low pressure air tank 12. The extra torque generated by the inverted operation of compressor 6 can be used to bring additional power to the driveline, for example to the output shaft 22 of engine 2 or to the wheels of the vehicle, in case additional power is needed. This can be the case when additional torque must be delivered when starting vehicle V on an ascending slope. In another case, the extra torque generated by compressor 6 can be used to run a compressor powering an air conditioning system of vehicle V. It can also be used to run an alternator. It can also be used to drive a compressor of a refrigerating system, in particular in the case of a truck equipped with a refrigerated compartment.

The expanded air with which low pressure air tank 12 is filled can be used to pneumatically power some subsystems of the vehicle at any time.

The fact that the high pressure air undergoes only partial expansion in the pneumatic motor favors filling up the low pressure air tank with air which has been compressed using recovered energy, i.e. energy which is virtually free, while nevertheless benefiting from the expansion from high pressure to low pressure in the form of mechanical energy delivered by the pneumatic motor. Of course, it reduces or even avoids the need to operate the compressor as a compressor during a motoring mode of the driveline.

When low pressure air tank 12 is full, the outlet of the pneumatic motor can be, in a non shown embodiment, connected to intake manifold 4 so as to provide engine 2 with compressed air to assist the internal combustion engine operations, especially during transient operation, such as during a sudden acceleration.

In the case of a conventional reversible piston compressor, used as pneumatic motor, the operation of compressor 6 can be controlled by managing the valve opening and closing times so as to regulate the air expanding rate. The outlet pressure of compressor 6 can be controlled in accordance with the pressure of low pressure air tank 12 and the pneumatic energy needs of the pneumatically powered subsystems of vehicle V.

A side effect of the invention is to increase the vehicle braking efficiency by using a high pressure compressor 6, which is able to absorb a higher amount of power from the driveline compared to a compressor adapted to produce only comparatively lower pressure compressed air.

The control of the valves of compressor 6 can be of different types. It can be passive automatic, i.e. controlled on the basis of the balance of inlet and outlet air pressures. These valves can also be controlled thanks to a camshaft, or be electro-mechanic valves controlled independently from the position of the pistons of compressor 6, for example by an electronic control unit.

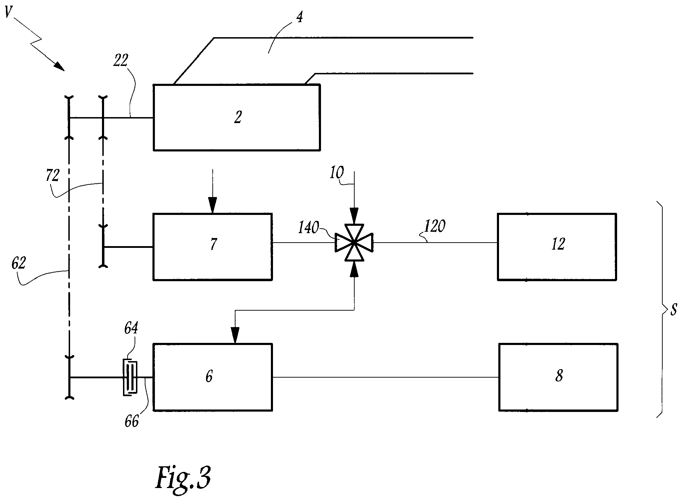

On Figure 3 is shown a second embodiment according to the invention wherein the compressed air generation system comprises a low pressure compressor for feeding the first air compressed air tank and a high pressure compressor 6 for feeding the high pressure compressed air tank. Basically it differs only from the first embodiment by the fact that a low pressure compressor 7 is added to the system and that the three way valve can be replaced by a four-way valve 14 through which an outlet of the low pressure compressor 7 can be connected either to the low pressure air tank 12, in view of directly feeding the low pressure air tank 12, or to the inlet of the high pressure compressor 6, in view of supplying the high pressure compressor tank with pre-compressed air which the high pressure compressor can compress to the high pressure prevailing in the high pressure air tank 8. In the latter case, the low pressure compressor 7 and the high pressure air compressor 6 are pneumatically connected in series to deliver compressed air to the high pressure compressed air tank 8. They then operate as a two stage compressor. The low pressure compressor 7 can be driven by the driveline, for example through a belt 72, or can be electrically driven.

When high pressure air is expanded in the reversed high pressure air compressor 6, the valve 140 is preferably set to connect the high pressure compressor inlet (which is then an outlet for the partially expanded air) to the low pressure tank 12 so that the partially expanded air is stored in the low pressure tank 12.

Such a design can allow filling the low pressure air tank 12 at the most efficient energy cost, including during vehicle motoring mode, in cases where the vehicle operation does not allow sufficient high pressure air production during costing or braking modes. Indeed the high and low pressure compressors 6, 7 may be of a different type, each best adapted to their respective pressure operating range.

It can be noted that valve 140 may also be set to connect the inlet of the high pressure compressor directly to the ambient air, both during motoring modes and during braking or coasting mode, and both during its operation as a compressor or as a pneumatic motor.

According to a non-shown embodiment, the invention can be implemented using, instead of a reversible compressor, a compressor and a distinct pneumatic motor to generate output torque while expanding high pressure air stored in high pressure air tank 8. In such a case, said distinct pneumatic motor may comprise an output shaft mechanically connected to a driveline component, such as the output shaft 22 of engine 2, or to another mechanically-powered subsystem. In a preferred form, the air inlet of the distinct pneumatic motor would then be connected to the high pressure air tank 8 and its air outlet would be connected to the low pressure air tank or to the ambient air, both though appropriate valves. In such a case, the compressor and the pneumatic motor may be of a different type of pneumatic machine. For example, the compressor can be a piston compressor while the pneumatic motor can be a turbine or a scroll expander.

According to non shown embodiments, transmission between engine 2 and compressor 6 in compression configuration, and/or between compressor 6 and engine 2 in expansion configuration, can be at constant ratio or at variable ratio, for example using a dedicated gearbox or a continuously variable transmission.

## Claims

1. Method for controlling a compressed air generation system (S) of an automotive vehicle (V), the system comprising at least one compressor (6) and a first compressed air tank (12), wherein the method includes steps of:
a) in a braking and/or coasting mode of the vehicle, compressing air to a pressure higher than a nominal pressure of the first compressed air tank (12),
b) storing air compressed at step a) in a high pressure compressed air tank (8) of the compressed air generation system (S),
c) in a power mode of the vehicle, expanding at least a portion of the air of the high pressure compressed air tank (8) in a pneumatic motor for generating torque.

2. Method according to claim 1, wherein at step c), at least a portion of the air of the high pressure compressed air tank (8) is expanded in the pneumatic motor down to a pressure not inferior to the pressure of the first compressed air tank (12) and is stored in said first compressed air tank.

3. Method according to claim 1 or 2, wherein at step c), a portion of the air of the high pressure compressed air tank (8) is expanded in the pneumatic motor to the atmosphere pressure.

4. Method according to one of the previous claims, wherein at least a portion of the torque generated at step c) is delivered to the driveline of the vehicle (V).

5. Method according to one of the previous claims, wherein at least a portion of the torque generated at step c) is delivered to an alternator, to a compressor of an air conditioning system of the vehicle (V) and/or to a compressor of a refrigerating system of a refrigerated compartment of the vehicle (V).

6. Method according to one of the previous claims, wherein at least a portion of the air of the high pressure compressed air tank (8) is directed to an intake manifold (4) of the internal combustion engine (2).

7. Method according to one of the previous claims, wherein the compressor is driven by a driveline of the vehicle.

8. Method according to one of claims 1 to 6, wherein the compressor is driven by an electric motor.

9. Method according to any preceding claim, wherein, in a power mode of the vehicle, a compressor is able to deliver pressurized air directly to the first compressed air tank (12).

10. Compressed air generation system (S) of an automotive vehicle (V), comprising at least one air compressor (6) and a first compressed air tank (12), wherein the air compressor (6) is adapted to compress air to a pressure higher than a nominal pressure of the first compressed air tank (12), wherein it further comprises
- at least one high pressure compressed air tank (8),
- a pneumatic motor (6) for generating torque by expanding the compressed air stored in the high pressure compressed air tank (8)
- and means for connecting an outlet of the pneumatic motor to the first compressed air tank.

11. Compressed air system according to claim 10, wherein the compressor (6) is reversible and forms the pneumatic motor for generating torque.

12. Compressed air system according to claim 11, wherein it comprises means (14) to selectively connect an inlet of the compressor (6) to an atmospheric pressure air intake (10) or to the first compressed air tank (12).

13. Compressed air system according to claim 10, wherein the means for generating torque comprise a pneumatic motor independent from the compressor (6).

14. Compressed air system according to one of claims 10 to 13, wherein the first compressed air tank (12) is a low pressure compressed air tank adapted to feed auxiliary pneumatically powered subsystems of the vehicle (V).

15. Compressed air system according to one of claims 10 to 14, wherein it comprises a low pressure compressor (7) for feeding the first compressed air tank(12) and a high pressure compressor (6) for feeding the high pressure compressed air tank (8).

16. Compressed air system according to claim 15, wherein the low pressure and the high pressure air compressors (7, 6) may be connected in series to deliver compressed air to the high pressure compressed air tank (8).

17. Automotive vehicle (V) comprising a compressed air generation system (S) according to one of claims 10 to 16.

## Patentansprüche

1. Verfahren zum Steuern eines Drucklufterzeugungssystems (S) eines Kraftfahrzeugs (V), wobei das System wenigstens einen Kompressor (6) und einen ersten Drucklufttank (12) umfasst, wobei das Verfahren die Schritte umfasst:
a) in einem Brems- und/oder Ausrollmodus des Fahrzeugs, Komprimieren von Luft auf einen Druck, der höher als ein Nenndruck des ersten Drucklufttanks (12) ist,
b) Speichern von bei Schritt a) komprimierter Luft in einem Hochdruck-Drucklufttank (8) des Drucklufterzeugungssystems (S),
c) in einem Leistungsmodus des Fahrzeugs, Expandieren wenigstens eines Teils der Luft des Hochdruck-Drucklufttanks (8) in einem pneumatischen Motor zum Erzeugen eines Drehmoments.

2. Verfahren nach Anspruch 1, wobei bei Schritt c) wenigstens ein Teil der Luft des Hochdruck-Drucklufttanks (8) in dem pneumatischen Motor auf einen Druck herunter expandiert wird, der nicht niedriger als der Druck des ersten Drucklufttanks (12) ist, und in dem ersten Drucklufttank gespeichert wird.

3. Verfahren nach Anspruch 1 oder 2, wobei bei Schritt c) ein Teil der Luft des Hochdruck-Drucklufttanks (8) in dem pneumatischen Motor auf den Atmosphärendruck expandiert wird.

4. Verfahren nach einem der vorhergehenden Ansprüche, wobei wenigstens ein Teil des bei Schritt c) erzeugten Drehmoments dem Antriebsstrang des Fahrzeugs (V) zugeführt wird.

5. Verfahren nach einem der vorhergehenden Ansprüche, wobei wenigstens ein Teil des bei Schritt c) erzeugten Drehmoments einer Wechselstrommaschine, einem Kompressor eines Klimaanlagensystems des Fahrzeugs (V) und/oder einem Kompressor eines Kühlsystems eines Kühlfachs des Fahrzeugs (V) zugeführt wird.

6. Verfahren nach einem der vorhergehenden Ansprüche, wobei wenigstens ein Teil der Luft des Hochdruck-Drucklufttanks (8) auf einen Einlasssammler (4) des Verbrennungsmotors (2) gerichtet wird.

7. Verfahren nach einem der vorhergehenden Ansprüche, wobei der Kompressor durch einen Antriebsstrang des Fahrzeugs angetrieben wird.

8. Verfahren nach einem der Ansprüche 1 bis 6, wobei der Kompressor durch einen Elektromotor angetrieben wird.

9. Verfahren nach einem vorhergehenden Anspruch, wobei in einem Leistungsmodus des Fahrzeugs ein Kompressor dem ersten Drucklufttank (12) komprimierte Luft direkt zuführen kann.

10. Drucklufterzeugungssystem (S) eines Kraftfahrzeugs (V), umfassend wenigstens einen Luftkompressor (6) und einen ersten Drucklufttank (12), wobei der Luftkompressor (6) daran angepasst ist, Luft auf einen Druck zu komprimieren, der höher als ein Nenndruck des ersten Drucklufttanks (12) ist, wobei es ferner
- wenigstens einen Hochdruck-Drucklufttank (8),
- einen pneumatischen Motor (6) zum Erzeugen eines Drehmoments durch Expandieren der in dem Hochdruck-Drucklufttank (8) gespeicherten komprimierten Luft,
- und eine Einrichtung zum Verbinden eines Auslasses des pneumatischen Motors mit dem ersten Drucklufttank umfasst.

11. Druckluftsystem nach Anspruch 10, wobei der Kompressor (6) reversibel ist und den pneumatischen Motor zum Erzeugen eines Drehmoments bildet.

12. Druckluftsystem nach Anspruch 11, wobei es eine Einrichtung (14) zum selektiven Verbinden eines Einlasses des Kompressors (6) mit einem Atmosphärendrucklufteinlass (10) oder mit dem ersten Drucklufttank (12) umfasst.

13. Druckluftsystem nach Anspruch 10, wobei die Einrichtungen zum Erzeugen eines Drehmoments einen pneumatischen Motor umfassen, der unabhängig von dem Kompressor (6) ist.

14. Druckluftsystem nach einem der Ansprüche 10 bis 13, wobei der erste Drucklufttank (12) ein Niederdruck-Drucklufttank ist, der daran angepasst ist, pneumatisch betriebene Hilfsuntersysteme des Fahrzeugs (V) zu versorgen.

15. Druckluftsystem nach einem der Ansprüche 10 bis 14, wobei es einen Niederdrucckompressor (7) zum Versorgen des ersten Drucklufttanks (12) und einen Hochdrucckompressor (6) zum Versorgen des Hochdruck-Drucklufttanks (8) umfasst.

16. Druckluftsystem nach Anspruch 15, wobei der Niederdruck- und der Hochdruck-Luftkompressor (7, 6) in Reihe verbunden sein können, um dem Hochdruck-Drucklufttank (8) komprimierte Luft zuzuführen.

17. Kraftfahrzeug (V) umfassend ein Drucklufterzeugungssystem (S) nach einem der Ansprüche 10 bis 16.

## Revendications

1. Procédé pour commander un système de génération d'air comprimé (S) d'un véhicule automobile (V), le système comprenant au moins un compresseur (6) et un premier réservoir d'air comprimé (12), dans lequel le procédé inclut les étapes suivantes :
a) dans un mode de freinage et/ou en roue libre du véhicule, la compression d'air jusqu'à une pression supérieure à une pression nominale du premier réservoir d'air comprimé (12),
b) le stockage de l'air comprimé dans l'étape a) dans un réservoir d'air comprimé à haute pression (8) du système de génération d'air comprimé (S),
c) dans un mode moteur du véhicule, la dilatation d'au moins une portion de l'air du réservoir d'air comprimé à haute pression (8) dans un moteur pneumatique pour générer un couple.

2. Procédé selon la revendication 1, dans lequel, dans l'étape c), au moins une portion de l'air du réservoir d'air comprimé à haute pression (8) est dilatée dans le moteur pneumatique pour en réduire la pression jusqu'à une pression non inférieure à la pression du premier réservoir d'air comprimé (12) et est stockée dans ledit premier réservoir d'air comprimé.

3. Procédé selon la revendication 1 ou 2, dans lequel, dans l'étape c), une portion de l'air du réservoir d'air comprimé à haute pression (8) est dilatée dans le moteur pneumatique jusqu'à la pression atmosphérique.

4. Procédé selon une des revendications précédentes, dans lequel au moins une portion du couple généré dans l'étape c) est fournie à la transmission du véhicule (V).

5. Procédé selon une des revendications précédentes, dans lequel au moins une portion du couple généré dans l'étape c) est fournie à un alternateur, à un compresseur d'un système de climatisation du véhicule (V) et/ou à un compresseur d'un système réfrigérant d'un compartiment réfrigéré du véhicule (V).

6. Procédé selon une des revendications précédentes, dans lequel au moins une portion de l'air du réservoir d'air comprimé à haute pression (8) est dirigée vers une tubulure d'admission (4) du moteur à combustion interne (2).

7. Procédé selon l'une des revendications précédentes, dans lequel le compresseur est entraîné par une transmission du véhicule.

8. Procédé selon l'une des revendications 1 à 6, dans lequel le compresseur est entraîné par un moteur électrique.

9. Procédé selon une quelconque revendication précédente, dans lequel, dans un mode moteur du véhicule, un compresseur est capable de fournir de l'air sous pression directement au premier réservoir d'air comprimé (12).

10. Système de génération d'air comprimé (S) d'un véhicule automobile (V), comprenant au moins un compresseur d'air (6) et un premier réservoir d'air comprimé (12), dans lequel le compresseur d'air (6) est adapté pour comprimer de l'air jusqu'à une pression supérieure à une pression nominale du premier réservoir d'air comprimé (12), dans lequel il comprend en outre
- au moins un réservoir d'air comprimé à haute pression (8),
- un moteur pneumatique (6) pour générer un couple en dilatant l'air comprimé stocké dans le réservoir d'air comprimé à haute pression (8),
- et des moyens pour raccorder une sortie du moteur pneumatique au premier réservoir d'air comprimé.

11. Système d'air comprimé selon la revendication 10, dans lequel le compresseur (6) est réversible et forme le moteur pneumatique pour générer un couple.

12. Système d'air comprimé selon la revendication 11, dans lequel il comprend des moyens (14) pour sélectivement raccorder une entrée du compresseur (6) à une admission d'air à pression atmosphérique (10) ou au premier réservoir d'air comprimé (12).

13. Système d'air comprimé selon la revendication 10, dans lequel les moyens pour générer un couple comprennent un moteur pneumatique indépendant du compresseur (6).

14. Système d'air comprimé selon l'une des revendications 10 à 13, dans lequel le premier réservoir d'air comprimé (12) est un réservoir d'air comprimé à basse pression adapté pour alimenter des sous-systèmes auxiliaires pneumatiques du véhicule (V).

15. Système d'air comprimé selon l'une des revendications 10 à 14, dans lequel il comprend un compresseur à basse pression (7) pour alimenter le premier réservoir d'air comprimé (12) et un compresseur à haute pression (6) pour alimenter le réservoir d'air comprimé à haute pression (8).

16. Système d'air comprimé selon la revendication 15, dans lequel les compresseurs d'air à basse pression et à haute pression (7, 6) peuvent être raccordés en série pour fournir de l'air comprimé au réservoir d'air comprimé à haute pression (8).

17. Véhicule automobile (V), comprenant un système de génération d'air comprimé (S) selon l'une des revendications 10 à 16.
